(19) Europäisches Patentamt
European Patent Office
Office européen des brevets

(11) **EP 4 121 723 B1**

(12) **EUROPEAN PATENT SPECIFICATION**

(45) Date of publication and mention
of the grant of the patent:
**30.10.2024 Bulletin 2024/44**

(21) Application number: **20743351.7**

(22) Date of filing: **13.07.2020**

(51) International Patent Classification (IPC):
**G01F 1/84** *(2006.01)*     **G01N 9/00** *(2006.01)*

(52) Cooperative Patent Classification (CPC):
**G01F 1/84; G01N 9/002;** G01N 2009/006

(86) International application number:
**PCT/IB2020/056587**

(87) International publication number:
**WO 2021/186232 (23.09.2021 Gazette 2021/38)**

(54) **SYSTEMS AND METHODS FOR DISTRIBUTED MASS FLOW MEASUREMENT**

SYSTEME UND PROZESSE FÜR VERTEILTE MASSENDURCHFLUSSMESSUNGEN

SYSTÈMES ET PROCÉDÉS POUR MESURER UN DÉBIT MASSIQUE DISTRIBUÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.03.2020 US 202016820919**

(43) Date of publication of application:
**25.01.2023 Bulletin 2023/04**

(73) Proprietor: **Saudi Arabian Oil Company
Dhahran 31311 (SA)**

(72) Inventors:
• **MAHALINGAM, Sakethraman
Aberdeenshire AB32 6FE (GB)**
• **ARSALAN, Muhammad
Dhahran 31311 (SA)**

(74) Representative: **Osha BWB
2, rue de la Paix
75002 Paris (FR)**

(56) References cited:
WO-A1-2019/134430     JP-A- H09 196 730
US-A- 4 984 472     US-B1- 6 360 614

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# Description

## CROSS REFERENCE TO RELATED APPLICATIONS

This application claims priority to U.S. Patent Application Serial No.: 16/820,919, filed March 17, 2020, entitled "SYSTEMS AND METHODS FOR DISTRIBUTED MASS FLOW MEASUREMENT".

## TECHNICAL FIELD

This specification describes examples of systems and methods usable for flow-related measurements in fluid conduits.

## BACKGROUND

Flow measurement is generally the quantification of bulk fluid movement, for example, in or through a conduit or pipe. Flow can be measured using a number of different techniques. Example flowmeters include pressure based meters, for example, orifice plate meters or Pitot tubes, mechanical meters, for example, based on fluid flow around a turbine or paddle wheel, and Laser-based methods based on the Doppler Effect observed in moving fluids. Which flow measurement technique is used may be determined by the application and environmental conditions. Example mass flow meters are described in patent documents US4984472, WO2019134430, JPH09196730 and US6360614.

## SUMMARY

A system and a method for determining properties of a fluid in a straight conduit according to the invention are defined by the appended independent claims. Specific embodiments are defined by the dependent claims. Such a system includes an exciter attached to the conduit. The exciter is for inducing one or more vibration patterns in the conduit. The system includes an isolator connected to the conduit at a first end of the isolator and to a fixed support on a second end of the isolator. The isolator is for preventing vibrations from being transmitted along the length of conduit beyond a predetermined measurement length. The system includes sensors attached to the conduit. The sensors are for measuring a change in one or more mechanical states of a conduit. The system may include one or more non-transitory machine-readable storage media storing instructions for determining one or more properties of the fluid. The system includes one or more processing devices to execute instructions to perform operations including receiving data from the sensor and determining a property of the fluid. The conduit may be a pipe. The fluid may include oil. The exciter may include a motor rotating a shaft and an eccentrically placed weight mounted on the shaft. The sensor may be selected from a group consisting of a displacement sensor, a motion or acceleration sensor, a vibration sensor, load (stress) sensor, and a strain sensor.

The system includes two isolators positioned along an axial length of the conduit, the isolators forming a measurement length of conduit. The exciter is placed along the measurement length of the conduit.

The system includes a plurality of sensors. The plurality of sensors are mounted on the measurement length of the conduit in a helical or cycloidal pattern.

The property of the fluid may be mass flow or density.

The system may include a plurality of exciters. At least one exciter may induce a torsional movement relative to a longitudinal axis of the conduit and at least one exciter may induce a bending movement in the conduit.

The system may include a distributed mass element. The distributed mass element is for altering a mechanical property of the conduit.

The method is for determining properties of a fluid in a conduit. The method includes connecting to the conduit an exciter and causing the exciter to induce one or more vibration patterns in the conduit. The method includes connecting an isolator to the conduit and to a fixed support. The isolator is for preventing vibrations from being transmitted along the length of conduit beyond a predetermined measurement length. The method includes attaching a sensor to the conduit to measure changes in one or more mechanical states of a conduit. The method includes receiving, by a processor, sensor data, determining, by the processor, from the sensor data, a property of the fluid. The conduit may be a pipe. The fluid may include oil. The exciter may include a motor rotating a shaft and an eccentrically placed weight mounted on the shaft. The sensor may be selected from a group consisting of a displacement sensor, a motion or acceleration sensors, a vibration sensor, load (stress) sensor, and a strain sensor.

The method includes connecting two isolators along an axial length of the conduit, the isolators forming a measurement length of conduit. The method includes connecting the exciter along the measurement length of the conduit.

The method includes connecting a plurality of sensors on the measurement length of conduit in a helical or cycloidal pattern.

The property of the fluid may be mass flow or density.

The method may include connecting a plurality of exciters to the conduit. The method may include causing at least one exciter to induce a torsional movement relative to a longitudinal axis of the conduit and at least one exciter to induce a bending movement in the conduit.

The method may include connecting a distributed mass element to the conduit, the distributed mass element to alter a mechanical property of the conduit.

Any two or more of the features described in this specification, including in this summary section, may be combined to form implementations not specifically described in this specification.

At least part of the processes and systems described in this specification may be controlled by executing, on one or more processing devices, instructions that are stored on one or more non-transitory machine-readable storage media. Examples of non-transitory machine-readable storage media include, but are not limited to, read-only memory, an optical disk drive, memory disk drive, random access memory, and the like. At least part of the processes and systems described in this specification may be controlled using a computing system comprised of one or more processing devices and memory storing instructions that are executable by the one or more processing devices to perform various control operations.

The details of one or more implementations are set forth in the accompanying drawings and the description. Other features and advantages will be apparent from the description and drawings, while the invention is defined by the appended claims.

## DESCRIPTION OF THE DRAWINGS

FIG. 1 is a schematic longitudinal cross-section of an example system as described in this specification mounted on a conduit.

FIG. 2 is a schematic longitudinal cross-section of an example system including a mechanical vibrators as described in this specification mounted on a conduit.

**FIG. 3A** is a diagram illustrating a first mode vibration pattern. **FIG. 3B** is a diagram illustrating a second mode vibration pattern.

**FIG. 4** is a diagram illustrating a dynamic system that includes a mass, stiffness, and damping.

**FIG. 5A** is a schematic circumferential cross-section of an example conduit with exciters causing angular motion of the conduit mounted on the conduit, as described in this specification. **FIG. 5B** is a schematic longitudinal cross-section of an example conduit with exciters causing angular motion of the conduit and with isolators that may prevent or attenuate angular or torsional movement mounted on the conduit, as described in this specification.

**FIG. 6A** is a schematic circumferential cross-section of an example conduit with isolators that may prevent or attenuate bending displacement or radial movement mounted on the conduit as described in this specification. **FIG. 6B** is a schematic circumferential cross-section of an example conduit with isolators that may prevent or attenuate angular or torsional movement mounted on the conduit as described in this specification.

**FIG. 7** is a semi-transparent cross-section of an example conduit with distributed (multiaxial) displacement/strain sensors mounted on the conduit as described in this specification.

**FIG. 8A** is a cross-section of an example conduit with a single exciter mounted on the conduit as described in this specification. **FIG. 8B** is a cross-section of an example system with three exciters mounted on the conduit as described in this specification.

Like reference numerals in the figures indicate like elements.

## DETAILED DESCRIPTION

Fluid flow measurements in conduits, for example, in pipes or other tubing, are often performed using a dedicated flow meter that is inserted physically into a fluid conduit. A flow meter typically has flanges at either end to connect the flow meter to the conduit. The conduit may be modified to have matching flanges to accommodate the flow meter into the conduit. The fluid then passes through the flow meter where the rate of flow and/or compositions of the fluids may be measured. These types of flow meters often have a preferred pipe orientation, for example, vertical orientation or a horizontal orientation. These meters may also have certain requirements regarding their use or installation on the pipe. In some examples, these requirements may include requirements that the fluid flow pass through a straight section of pipe for a certain length that is a multiple of the diameter of the pipe, either before or after the flow meter, or both.

When a fluid is a mixture of multiple fluids, for example, a mixture of one or more of oil, water, gas, and solids (usually called multiphase fluid), the requirements imposed on the type or installation of flow meters may be even more extensive. For example, it may be necessary that the multiphase flow meter be installed immediately after a blind T-junction in the pipe with the flow meter installed in the section with the flow going vertically upwards immediately downstream of the T-junction. These specific requirements may ensure that a (multiphase) fluid is fully mixed or is homogenous because incomplete mixing or presence of heterogeneous fluids may cause errors in the measured flow rate. Some meters (for example, mechanical meters, for example meters including a turbine or other moving part immersed in the fluid) intrude in the fluid flow path, potentially causing a permanent pressure drop in the fluid flow, which needs to be compensated in the design of the entire system. At the very least, strict conditions on fluid entry and exit of into and out of the meter may need to imposed. In some cases, when the composition of the fluid or flow rate in the conduit changes, a conventional flow meter (for example, a mechanical meter) may become unusable because the meter is out of its specified range of operation. This means that the meter may have to be replaced causing disruption in the fluid conduit.

Some multiphase meters are not "full-bore," meaning that the inside diameter of the flow meter is different from the diameter of the conduit before and after this meter. This size difference may cause build-up of material or debris upstream (or downstream) of the meter. Such build-up may impede or prevent any automated inspection methods that may be used to examine the integrity of the inside wall of the conduit.

The calibration of existing flow meters may need to be adapted with changing compositions or fractions of different components in the fluid and flow velocities. While a meter may function well within its range at the time of the installation, the flow may shift outside the measurement range of the flow meter. In such cases, the calibration of the flowmeter has to be repeated and the meter reconfigured. This reconfiguration may be accomplished by a software update. In some cases, however, the flow meter may have to be replaced with a different meter. Replacement is associated with the installation difficulties and with expensive commissioning and wiring.

This specification describes an example flow measurement system that may be attachable on an outside surface of an existing length of a conduit (for example, a pipe) carrying a fluid. An example system may be based on the Coriolis mass flow measuring principle and may be capable of measuring distributed density of the fluid within a given cross-section or length of the pipe, or the fluid flow rate along a length of the pipe, or both. An example system may include one or more exciters, for example, a plurality of vibrators (for example, mechanical or electromagnetic vibrators), positioned at various points on the outer surface of a given length of conduit to induce a one or more impulses, vibration patterns, or one or more pre-defined sequence of vibration patterns in the conduit, for example, in an outside surface of the conduit. An example system may include one or more isolators, for example, a plurality of isolators (for example, mechanical or electromagnetic isolators), positioned at various points on the outer surface of a given length of conduit, for example, at each end of a specified length of the conduit, for example, to prevent vibrations from being transmitted along the length of the conduit beyond a predetermined measurement length. An example system may include one or more sensors, for example, a plurality of displacement, strain, or load (stress) sensors, positioned at various points on the outer surface of a given length of conduit to measure changes in one or more mechanical states of a conduit.

In some implementations, an example system may include one or more components, for example, one or more exciters or isolators, that can be attached to any existing conduit without any obstruction to the flow inside the conduit. In some implementations, an example system may be suitable to fit an existing conduit, for example, a pipe or other tubing, for example, an oil or gas line. Not according to the claimed invention, one or more components of an example system may be installed er near a straight section of conduit. In some implementations, one or more components of an example system may be installed on or near a curved section of conduit. In some implementations, installing one or more components of an example system on or near a curved sections of conduit may increase the sensitivity of the measurement described in this specification. Not according to the claimed invention, one or more components of an example system may be installed on or near a straight section of conduit and on or near a curved section of conduit, for example, to provide a first and a second measurement, for example, to improve the measurement made on a single section of conduit.

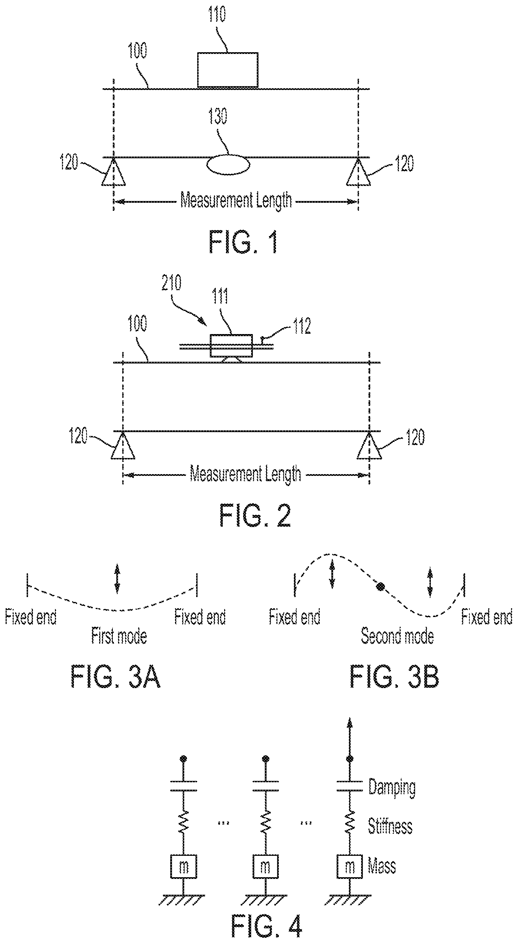

An example system as described in this specification is shown in **FIG. 1.** An example system may include one or more sets of exciters, for example one or more exciters 110, for example, one or more mechanical or electromagnetic vibrators. One or more exciters may be attached to the outside of a length of conduit at predefined locations on the surface of the pipe and may be connected to a power source. In some implementations, one or more exciters may be attached to a conduit using a (reversible) adhesive, one more clamps (for example, magnetic clamps), or welds.

In some implementations, a conduit may be substantially cylindrical having a longitudinal axis parallel to the linear dimension of the conduit and perpendicular to the (circular) cross-section of the conduit. In some implementations, one or more exciters may be capable of or configured to induce movement of a conduit perpendicular to the direction of the axis of the conduit (for example, bending movement). In some implementations, one or more exciters may be capable of or configured to induce angular or torsional movement relative to the axis of the conduit (for example, twisting movement). In some implementations, one or more exciters may be capable of or configured to induce movement of a conduit parallel to the direction of the axis of the conduit (axial movement) or radial movement (for example, expansion or contraction of a conduit).

In some implementations, an example exciter may be or include a mechanical vibrator. In some example implementations, a mechanical vibrator may include a motor rotating a shaft with an eccentrically placed weight (for example, a wheel with uneven mass distribution) mounted on the shaft. In some example implementations, for example, as illustrated in **FIG. 2**, an exciter, for example, a mechanical vibrator 210, may be mounted on a surface of a conduit 100, for example with one or more (reversible) adhesives or welds. An example exciter may be or include a vibrator 210 that may include motor 111 and a rotor with an eccentric weight 112. When the motor rotates, the eccentric load may cause the motor to move (wobble). The motor may transmit this movement to the pipe through the mounts to the conduit 100, causing vibration. Movement may be controlled by adjusting rotational speed (higher speed causing increased vibration frequency). In some implementations, an example exciter may be or include a magnetic vibrator. In some example implementations, a magnetic vibrator may include one or more magnets, for example, permanent magnets or electromagnets, that may be attached on the outside of a conduit, for example, with welds or (reversible) adhesives. One or more electromagnetic coils may be mounted on a structure that is firmly connected to the ground or other fixed support near the magnets and arranged near or around the magnets such that a gap is formed between the magnets and the coils. Exciting the coils at suitable frequencies or voltages may cause generation of one or more magnetic fields that may push or pull the magnets (and thus the conduit) towards or away from the coils. In some implementations, one or more exciters may be implemented as one or more wireless devices, for example, as devices that do not receive or transmit data or power via an electric wire. In some example implementations, an example system may include a motor (mechanical vibrator) or an electromagnet or an electromagnetic coil, and may include one or more of a battery, an energy harvesting system to use heat/solar/vibration energy (for example, from the conduit), one or more position sensors to monitor position of one or more regions of the conduit or components of the system, a wireless data transmission system to transmit data to a control unit.

In some implementations, one or more exciters, for example, one or more mechanical vibrators, may produce mechanical vibrations of a frequency or a plurality of frequencies that may together be sequenced into a pattern of vibrations. These vibrations may be transferred from the one or more exciters to the outside surface of the conduit. In some implementations, vibration frequencies may vary from a few hundred Hertz (Hz) to a few million Hertz. In some example implementations, a vibration frequency produced by an example exciter may be between 100 mHz to 5000 Hz. In some implementations, a vibration frequency produced by an example exciter may be above a very low frequency (for example, 5 Hz). A very low vibration frequency may carry over large distances (for example, several kilometers) because of lower attenuation compared to higher frequencies. In some implementations, a vibration frequency produced by an example exciter may be within the audible range. In some implementations, an excitation frequency may be selected based on a noise spectrum at or near a measurement location to avoid frequencies that are typically observed in that location. For example, a pump connected to a conduit may produce a clear 50 Hz pulsation in a flowing fluid along with other harmonic frequencies that may be multiples of 50 Hz. These flow pulsations may induce vibrations (noise) in the conduit at similar or same frequencies, which may interfere with an applied excitation frequency. An excitation frequency may therefore be significantly higher (for example, 190 Hz) than the noise frequencies. In some implementations, an excitation frequency may be applied continuously or intermittently, or may be turned off if a system upset is detected. In some implementations, an excitation frequency may be applied in intervals. In some implementations, an exciter may be capable of or configured to deliver a pulse pattern of vibration (for example, a 20 Newton force lasting 0.1s applied to a conduit every 0.5s) instead of or in addition to (continuous) vibration. Such a pulse pattern may be characterized by one or more of the magnitude of the applied force, the duration for which such a force is applied, and the interval between successive pulses. In some implementations, a pulse pattern may be defined by one or more of the magnitude of the applied displacement, the duration for which such a displacement is induced in the conduit, and the interval between successive pulses. Without wishing to be bound by theory, in mathematical terms, such pulses may be equivalent to the application of several well-defined frequencies all at once. In some implementations, for example, if a pulse pattern is applied, maintenance of structural integrity of the system may require turning off the excitation periodically, for example, after a predetermined number of pulses.

An example system may include one or more isolators, for example, one or more isolators 120, for example, programmable or adjustable mechanical vibration isolators, that may be used to prevent or attenuate the transmission of induced vibrations beyond a specified length of conduit on which the system is installed, for example, beyond a measurement length. An example system is illustrated in FIG. 1. An isolator may be used to produce the desired mechanical constraints at two ends of the specified length of conduit used for the fluid measurements described in this specification. An example isolator may be connected to a conduit at a first end and to the ground or other fixed support on a second end. In some implementations, one or more isolators may be placed between the two isolators at each end of a measurement length, for example, to induce a "second mode" vibration pattern as described in this specification. In some implementations, an isolator, for example, a single isolator, may be installed or arranged on a conduit to produce a "simply supported beam"-like effect on a length of conduit on which an example system is installed. An example isolator to be used with the systems described in this specification may be capable of or configured to prevent radial or angular displacement of an (outer) wall of the conduit but would allow bending and axial movement. In an example implementation, one or more isolators may be installed or arranged to prevent axial, radial, and bending displacement of a conduit, but may allow angular displacement. In some implementations, one or more isolators may be adjustable or may be activated or deactivated, for example, depending on frequency or mode of excitation. In some implementations, one or more isolators may be automatically adjusted using am electronic control unit.

In some implementations, an isolator may include a combination of one or more elastic elements (like, for example, a spring) and one or more damping elements (like, for example, a dashpot). The one or more elastic elements and one or more damping elements may be connected to the conduit at a first end and to the ground or other fixed support on a second end. An isolator may be adapted or configured to absorb vibrations and therefore prevent vibrations from being transmitted (for example, for passive isolation). In some implementations, a first isolator may be installed at a starting point of the measurement length and a second isolator may be installed at the end of a measurement length of conduit. For example, an exciter may be placed on a conduit between two isolators, the distance between isolators defining a measurement length of conduit. The isolators may prevent or attenuate transmission beyond the measurement length of any vibrations or other movement of conduit induced by the exciter.

In some implementations, an isolator may be operable or configured similar to an exciter (for example, for active vibration isolation). Such an example isolator would work "in reverse" of an exciter. For example, an active vibration isolator may produce an impulse or vibration at an exact opposite of the frequencies detected at location where the active vibration isolator is installed, thereby cancelling the detected vibrations. In some implementations, a system may include one or more passive isolators and one or more active isolators. In some implementations, a system may include one or more passive isolators and one or more active isolators that may be operable as one or more exciters. In some implementations, one or more isolators may prevent movement of a conduit perpendicular to the direction of the axis of the conduit (for example, bending movement). In some implementations, one or more isolators may prevent angular or torsional movement relative to the axis of the conduit. In some implementations, a torsional isolator may be or include an active isolator, for example, an exciter operating in reverse. In some implementations, one or more isolators may prevent movement of a conduit parallel to the direction of the axis of the conduit (axial movement) or radial movement (for example, expansion or contraction of a conduit).

An example system may include one or more sensors, for example, one or more sensors 130 mounted on a conduit, for example, one or more sensors that may be used to detect one or more properties of a conduit and to measure changes in such properties. Sensors that may be used with the system described in this specification may include displacement, motion or acceleration sensors, for example, vibration sensors, load (stress) sensors, strain sensors (for example, strain gauges), temperature sensors, or pressure sensors.

In some implementations, one or more motion sensors may be capable of or configured to detect movement of a conduit perpendicular to the direction of the axis of the conduit (for example, bending movement). In some implementations, one or more motion sensors may be capable of or configured to detect angular or torsional movement relative to the longitudinal axis of the conduit (for example, twisting movement). In some implementations, one or more motion sensors may be capable of or configured to detect movement of a conduit parallel to the direction of the axis of the conduit (axial movement) or radial movement (for example, expansion or contraction of a conduit. In some implementations, sensors may be based on optical, magnetostrictive (property of ferromagnetic materials which causes them to expand or contract in response to a magnetic field), or electromagnetic phenomena.

In some implementations, a system may include a distributed displacement, motion, or acceleration sensing system. In some implementations, a distributed displacement, motion, or acceleration sensing system may include two or more displacement, motion, or acceleration sensors that may capable of or configured to pick up higher modes of vibration (for example, modes higher than a first mode or second mode). For example, a first displacement, motion, or acceleration sensor may be capable of detecting movement or vibration in a first frequency band, and a second displacement, motion or acceleration sensor may be capable of detecting movement or vibration in a second frequency band. In some implementations, pooling data from two or more sensors may render the system more sensitive than a system based on a single mode or excitation frequency band.

This specification describes an example flow measurement system based on the Coriolis mass flow measuring principle that maybe capable of or configured to measuring distributed density of the fluid within a given cross-section or length of the pipe, or the fluid flow rate along a length of the pipe, or both. A strain/displacement response of a fluid filled conduit to a mechanical excitation, for example, vibration, depends on the properties of the fluid (for example, density, viscosity, ratio of liquid, gas, or solid phases) or the mass flow rate of the fluids, or a combination of fluid properties and mass flow rate. In conduits filled with a mixture of two or more fluids, the strain/displacement response of a conduit depends on the properties of the mixture of fluids, for example, on the proportion of different fluids within the conduit. For example, a mixture of water and oil is likely to have a higher density compared a mixture of water and gas. One or more of strain, displacement, and load across or along a length of conduit may be measured, for example, using a one or more strain or load sensors that may be installed in predefined locations on the conduit.

Generally, when a fluid (for example, a gas or liquid, or a mixture of one or more of a gas, a fluid, and a solid) passes through a conduit that is being accelerated (mechanically excited) in a direction that is not parallel to the axis of flow, the contents of the conduit experience a Coriolis force. The Coriolis force is an inertial force that is perpendicular to both the axis of the centrifugal acceleration and the axis parallel to the direction of flow. The magnitude of the Coriolis force depends on the mass flow rate of the contents of the conduit. An effect of the Coriolis force is to cause a twist of or in the conduit in addition to bending caused by the mechanical excitation. This twist in turn causes a time delay between the applied mechanical excitation and the response of the contents of the conduit to this excitation. The time delay measured between two points along the direction of flow in a section of the conduit may be used to calculate the mass flow rate of the contents of that section of the conduit. In the frequency domain, the time delay translates to a phase shift between the measured waveforms of displacement (or force) between the two points in the conduit.

In some implementations, a vibration (excitation) regimen or pattern to be used for flow measurements using a system as described in this specification may be determined, for example, based on the length and shape of a measurement section, for example, a length of fluid filled conduit defining a measurement length. An example vibration pattern may be or may include a set of vibration modes. For example, a first mode is a mode where the end points of a length of conduit are fixed and a single (maximum) displacement of pipe occurs in the middle of the length of conduit as shown in FIG. 3A. A second mode is a mode where besides the fixed end points of the length of conduit, another point between the end points is fixed, for example, as shown in FIG. 3B. The applied mechanical excitation may cause other modes of vibration, some of which may cause the conduit to move out-of-plane of the image of FIG 3B. For each mode, the system's response including the fluids within the pipe may be modelled as a distributed dynamic system that includes a mass, stiffness, and damping (FIG. 4). Frequency and amplitude of vibration may be determined by of the equivalent mass, damping, and stiffness of the conduit and fluid combination. For example, a liquid flow within the conduit may add more mass and damping to the system than gas flow. A difference in fluid property (for example, density or flow rate) may result in different preferred frequencies between different fluids. The response of the system may reveal if the system is operating close to its natural frequency as amplitudes may be higher when the fluid system or conduit is vibrated at close to its natural frequency. In some implementations, one or more exciters, for example, one or more vibrators, may cause repeated "hammer-blow"-like pulses on the pipe. Time delay between pulses may be adjusted such that the resulting signal is equivalent of applying a pulse signal that contains the frequencies of several modes combined.

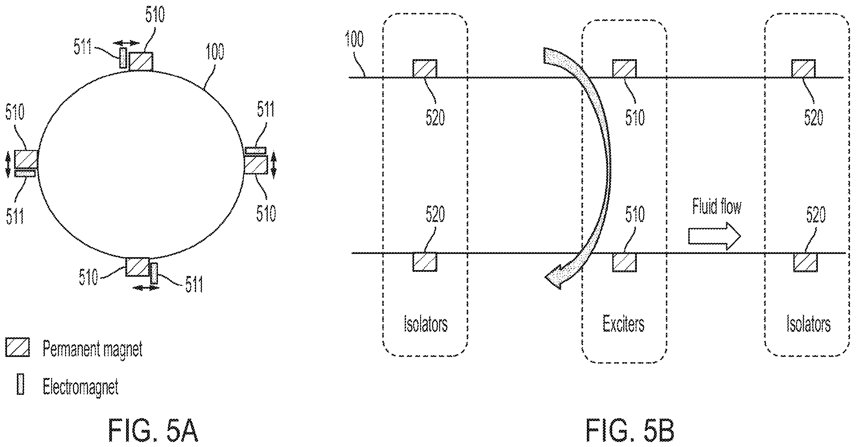

In some implementations, torsional vibration may be applied to the outside of a conduit, for example as shown in FIG. 5A and FIG 5B. In some example implementations, one or more exciters 510 may include a set of permanent magnets (for example, four magnets) that may be attached equally spaced and circumferentially around a section of conduit 100. Complementary electromagnets 511 may be switched on and off to cause a twist in the pipe that is then transmitted in either direction of the exciter thereby causing angular motion of the conduit, for example, as illustrated in FIG. 5A. In some implementations, isolators, for example, isolators 520, at the end of a measurement length of conduit may be exciters operating "in reverse" to prevent the transmission of the twist beyond the measurement length. In some implementations, twist amplitude and frequency may be measured, for example, at discrete points along the measurement length. While many fluids may have limited ability to withstand torsional motion (unlike the conduit), highly viscous fluids or slurries within the pipe may respond to the application of torsion (for example, due to viscous coupling). The measurement of the transmission of such twists may yield information on the viscosity of the fluid. In some implementations, torsional vibration measurements may be used to monitor the structural integrity of the measurement length, for example to ensure that the measurements are not weakening the mechanical strength of the conduit.

In some implementations, resulting displacements of a conduit may be concurrently measured by a set of distributed displacement, strain, or load sensors placed on or near an outer surface of the conduit, for example, at locations coinciding with the location of one or more vibrators or at other locations along a measurement length.

In some implementations, the location of exciters, for example, vibrators, would be at the most flexible point along a measurement length, for example, at or near a point halfway between two isolators. In some implementations, placing an exciter at or near a point half way between two isolator may result in a maximum of displacement or movement with the least amount of applied force. In some implementations, one or more sensors may be placed along a measurement length at two locations, for example, at or near a first isolator (for example, at a starting point of the measurement length) or at or near a second isolator (for example, at or near an end point of the measurement length). In some implementations, locations in between may be chosen, for example, based on change in direction of flow or a change in conduit properties that may alter the mass, stiffness or damping, or based on conduit shape, conduit diameter, conduit material, or additional clamps or flanges present on the conduit. In some implementations, locations of exciters or isolators may be chosen based on dynamic modelling of the system. From the displacement/strain and/or load measurements, the distributed density and mass flow rate of the fluids within the conduit may be determined.

In some implementations, a length of conduit that may form a measurement length may be between 0.1-10 meters in length. In some instances, longer lengths may lead to lower frequencies being applied (for example, frequencies below 10 Hz). Such frequencies may result in vibrations being conducted over longer distances due to their lower attenuation. Such vibrations may have consequences at locations outside the measurement length if they are not isolated by the isolators. In some implementations, measurement length may increase proportionally with an increase in conduit diameter.

Without wishing to be bound by theory, the density and rate of fluid flow may alter the dynamic model of the system as explained in this specification. In some implementations, these effects may be modelled on several pre-existing conduits, for example, pipeline of different shapes/sizes/materials, and may be subsequently tested to develop empirical calibration curves that relate a frequency response of the fluid system to a density or mass flow rate (or both) of the fluid. For example, the resonant frequencies of a conduit may be altered by the presence of fluid - a correlation based on both modelling and experiment may link the resonant frequencies of the fluid system to the density of the fluid within. For the mass flow rate, a phase shift in the vibration pattern may occur between vibration sensors placed along a measurement length, due to the Coriolis Effect. A correlation between the phase shifts between the sensors based on both modelling and experiments may be used to determine mass flow rate.

A section of conduit to be measured, for example, a measurement length of a conduit, may be chosen based on, for example, accessibility or suitability for a detailed analysis of the dynamic behavior of the fluid system that may be performed under different flow rates and fluid regimens (for example, under different pressures or temperatures). Based on an analysis of, for example, conduit properties including diameter or wall thickness, location of at least one exciter and at least one (for example, two) displacement, strain, or load sensors may be chosen. A library of correlations for conduits, for example, of pipes of typical shapes - straight pipe, L-bends, U-bends etc. may be developed based on analysis and experiments. This library may be used, for example, to calibrate a system as described in this specification. In some implementations, non-intrusive pressure and temperature sensors to measure the pressure and temperature within a conduit may be used to provide additional information, for example, for calibration of a system as described in this specification

In some implementations, an example system may be used with a conduit of outer diameter D and inner diameter d that is a "simply supported beam" with a length of L. An example system may include a mechanical exciter (for example, a vibrator) positioned in the middle of this length L. Assuming the conduit is made of a material with a Young's modulus of E and has a weight 'q' kilograms per unit length, the resonant frequency f of this structure would be defined by the equation

$$f = \frac{\pi}{2} \sqrt{\frac{EI}{qL^4}} \qquad (1)$$

Where I is moment of inertia of the conduit about the plane of bending is defined by

$$I = \frac{(D^4 - d^4)}{64} \qquad (2)$$

Equations 1 and 2 assume that the pipe is empty. Filling the conduit with a fluid at least through the length L, would change both the effective weight per unit length of the conduit and the effective Young's modulus of the conduit. The effective Young's modulus may depend on a combination of the fluid's bulk modulus and viscosity. The effective Young's modulus may also depend on the direction of type of excitation (for example, vibration) induced on the outer surface of pipe.

The primary physical principle is one of correlating the density to the resonant frequencies of the system and the phase shift in the vibration across the flow direction caused by the Coriolis Effect as explained previously. As described in Equation 1, the resonant frequency of a simply supported conduit is proportional to the square root of the effective stiffness of the system and inversely proportional to the square root of the effective mass of the system. For example, the shorter the length of pipe, the higher the stiffness and higher the resonant frequency. When a fluid is enclosed within the conduit, the fluid does not contribute significantly to the effective stiffness of the system as it is unable to sustain any tensile strain and will deform readily in response to an applied force. In contrast, the fluid within the conduit will contribute significantly to the effective mass of the system (particularly if the fluid is or includes a liquid), causing the resonant frequency to decrease. The greater the similarity of the stiffness-to-weight ratio of the material enclosed by the conduit and the stiffness-to-weight ratio of the material of the conduit, the more accurately equations (1) and (2) would describe the behavior of the conduit. The strain/displacement behavior of an outer surface of the conduit would be symmetric across the circumference of a cylindrical conduit when the conduit is uniformly filled with a fluid. A simple Fourier transform of the displacement/strain behavior may reveal that the frequency given by a modified version of equation (1) that accounts for the presence of fluid inside the conduit matches the resonant frequency of the conduit system.

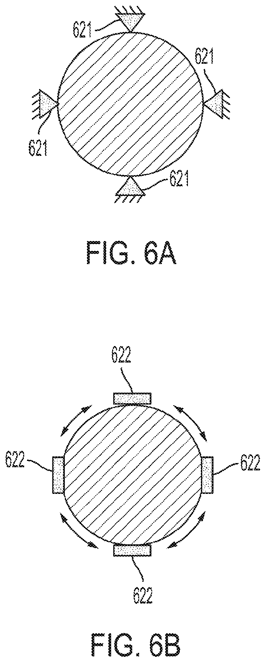

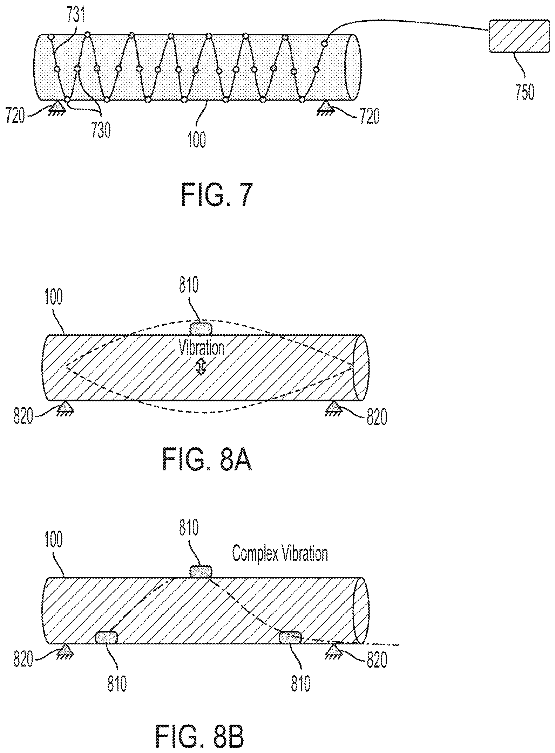

In some implementations, an example section of conduit may include one or more isolators defining a measurement length, for example, as shown in FIG. 1. In some implementations, one or more isolators, for example, isolators 621, may prevent or attenuate bending displacement or radial movement (for example, expansion or contraction of a conduit) movement of a conduit, for example as illustrated in FIG. 6A. In some implementations, one or more isolators, for example, isolators 622, may prevent or attenuate angular or torsional movement of a conduit, for example as illustrated in FIG. 6B. The system according to the invention includes one or more distributed sensors, for example, (multiaxial) displacement/strain sensors 730, that are mounted, for example, in sequence on a wire 731, and distributed or wound in a helical or cycloidal pattern around a section of a conduit 100 between two isolators 720 and connected to a control unit, for example, control unit 750, as shown in FIG. 7. In some implementations, individual multiaxial strain/displacement sensors may be placed on a section of conduit and may be individually connected to a control unit. Strain may be measured and movement patterns of the conduit may be constructed. The number of measuring points may depend on conduit dimensions, for example, length of section, inner diameter, or outer diameter. Based on the Nyquist rate requirement stating that properly representing a waveform requires a sample rate of at least twice the signal frequency, strain/displacement may be measured at least two times the frequency of the mode shape of the vibration induced in the conduit.

In some implementations, flow of fluid within a conduit may cause a response in form of twisting motion of the pipe wall in combination with transverse and longitudinal vibrations, for example, depending on excitation regimen. In some implementations, a conduit 100 may be excited by a single exciter, for example, exciter 810, within a measurement length between two isolators, for example, isolators 820, which may induce a first mode vibration pattern (dashed line), for example as shown in FIG 8A. In some implementations, a conduit 100 may be excited by two or more exciters, for example, exciters 810, within a measurement length between two isolators, for example, isolators 820, for example as shown in FIG 8B. Two or more exciters may be placed circumferentially opposed or spaced along a longitudinal axis of a conduit, or a combination of such patterns. Placing and activating two or more exciters may lead to complex vibration patterns in the conduit. In some implementations, each point on the wall of a conduit may have up to 6 degrees of freedom. In some implementations, strain along each degree may be captured by one or more multi-axial strain sensors. From the strain measurements, a displacement profile of a conduit wall may be reconstructed.

From strain and load (stress) measurements on the surface of the pipe, the mass distribution across one or more cross-section of the conduit or along a length of conduit may be determined, for example, using a processor of a control unit that may receive raw strain, stress, displacement, or other data and may compute flow data based at least in part on the methods described in this specification. Depending on the properties of the conduit material and the density of the fluids within the pipe, mass distribution may be converted into a density distribution within the conduit. This analysis may result in the "imaging" of flow components, for example, in real-time, and results may be displayed graphically on a computer screen. In some implementations, the image reconstruction process may not (only) be used in the display of an image but maybe used for the determination of, for example, distribution or variation of density and mass flow rate of the fluids within the conduit.

In some implementations, several measurement sections, for example, measurement lengths, may be established along a length of a conduit. The resonant frequency within each measurement section or length may be an indication of the density of the fluid within that section or length. Measurements of vibration pattern of the conduit in two directions, for example, in the direction perpendicular to gravity and parallel to gravity, may provide information to determine weight distribution across a section of conduit. For example, the difference in mass/density between two measurement directions in an example cross-section of conduit may be distinguishable and yield information regarding mass distribution or fluid composition. Several such measurements along the length of a section of conduit may be used to generate an equivalent image, for example, for displaying a stream of varying fluid density or other property.

In some example implementations, a system as described in this specification may be controlled using on or more processors of a control unit. In some implementations, a control unit may be (pre)programmed to control one or more exciters, for example, to induce a specific set of vibration patterns. In some implementations, a control unit may be (pre)programmed to control one or more mechanical isolators, for example, to isolate one or more sections of conduit in response to detected vibration patterns. In some implementations, a control unit may be (pre)programmed to execute an algorithm modify and "learn" vibration patterns for a particular fluid system.

Executing this learning algorithm may result in establishment of an "optimal vibration patterns" for a fluid system, which may result in improved signal-to-noise ratio and increased accuracy of measurements. In some implementations, a control unit may be (pre)programmed to operate in a closed loop manner, but may be operable to receive user input to adjust one or more vibration patterns. For example, while lower excitation frequencies (for example, below 100 Hz) may be better suited to obtain a distributed density over a larger volume of fluid, higher frequencies may be better suited to "dissect" the flow patterns, resulting in a distributed density measurements that may be averaged over smaller volumes.

In some example implementations, a system may include two or more exciters mounted on a substantially horizontal section of a conduit. A first exciter may be mounted or connected to the conduit to excite the conduit in a direction substantially perpendicular to a longitudinal axis of the section of conduit and substantially parallel to the direction of gravity. A second exciter may be mounted or connected to the conduit to excite the conduit in a direction substantially perpendicular to a longitudinal axis of the section of conduit and substantially perpendicular to the direction of gravity. In some implementations, the first exciter and the second exciter may be positioned along a (circular) circumference of a conduit, for example, the first exciter and the second exciter may have the same position along a longitudinal axis of a conduit. In some implementations, the first exciter and the second exciter may have different positions along a longitudinal axis of a conduit.

In some implementations, a system may include one or more exciters to induce angular or torsional movement relative to the axis of a section of conduit and one or more exciters to excite the conduit in a direction substantially perpendicular to a longitudinal axis of the section of conduit. In some implementations, torsional excitation and vibration measurements may be used in flow calculations to cancel viscosity effects.

In some implementations, an example system may be implemented as a portable system. In some example implementations, an example exciter may include a short section (for example, a 1 cm, 10 cm, or 50 cm section) of a pipe that may be wrapped with a material (for example, foil) made from a paramagnetic or ferromagnetic material. The example exciter may include a solenoid. The section of pipe would be attached to the conduit and magnetically couple through an air gap to a magnet, for example, an electromagnet, surrounding this section of pipe. Permanent magnets may be used both on the pipe or on an exciter coil surrounding the pipe, or both, to enhance coupling, for example, so that the system would work with different (for example, larger) air gaps. Depending on the force needed for excitation, these exciters may fit into a typical oilfield kit bag or suitcase. Example isolators may include mechanical clamps, for example, metal U-clamps that may be bolted or otherwise attached to a solid foundation, for example, below the pipe.

In some implementations, an example system may include a distributed mass element, for example, one or more weights that may be attached to a conduit. In some implementations, attaching a distributed mass element to a conduit may alter, for example, amplify or attenuate, vibrations or vibration patterns. In some example implementations, a distributed mass element may be or include a (tapered) collar that adds a fraction or a multiple of the weight of a section of conduit, for example, a measurement length, to the conduit. In some example implementations, a distributed mass element may be or include a sleeve placed around a conduit, for example, around a measurement length or a portion of the measurement of the conduit. In some implementations, the sleeve alters stiffness of the conduit. In some example implementations, altering, for example, increasing, stiffness of a conduit may alter, for example, amplify or attenuate, vibrations or vibration patterns. In some implementations, a sleeve may include one or more actuators or elements that may be actuated to alter or control stiffness of the sleeve and thus stiffness of the conduit. In some implementations, an isolator may be or may include a, non-contact magnetic coil isolation device that may be adapted to produce a holding force that varies along a length of the conduit. In some implementations, a magnetic coil isolation device may be capable of or configured to alter a damping along a length of the conduit. In some implementations, an example system may include one or more chambers mounted on a surface of a conduit and filled with an electrorheological or a magnetorheological fluid. These "smart" fluids may be subjected to an electrical or magnetic field that may cause the fluid to turn from liquid to a solid or vice versa, thus providing distributed stiffness and damping over a length of conduit.

In some implementations, a system may be capable of or may be configured to measure temperature and pressure a fluid in a conduit. The density of a fluid and a fluids compressibility may depend on fluid pressure or temperature, or both. In some implementations, a system may include one or more temperature sensors or one or more pressure sensors. In some implementations, an example pressure sensor may be operable to measure pressure in the conduit non-invasively, for example using ultrasound.

At least part of the system described in this specification and its various modifications may be controlled by a computer program product, such as a computer program tangibly embodied in one or more information formation carriers. Information carriers include one or more tangible machine-readable storage media. The computer program product may be executed by a data processing apparatus. A data processing apparatus can be a programmable processor, a computer, or multiple computers.

A computer program may be written in any form of programming language, including compiled or interpreted languages. It may be deployed in any form, including as a stand-alone program or as a module, component, subroutine, or other unit suitable for use in a computing environment. A computer program may be deployed to be executed on one computer or on multiple computers. The one computer or multiple computers can be at one site or distributed across multiple sites and interconnected by a network.

Actions associated with implementing the systems may be performed by one or more programmable processors executing one or more computer programs. All or part of the systems may be implemented as special purpose logic circuitry, for example, a field programmable gate array (FPGA) or an ASIC application-specific integrated circuit (ASIC), or both.

Processors suitable for the execution of a computer program include, for example, both general and special purpose microprocessors, and include any one or more processors of any kind of digital computer. Generally, a processor will receive instructions and data from a read-only storage area or a random access storage area, or both. Components of a computer (including a server) include one or more processors for executing instructions and one or more storage area devices for storing instructions and data. Generally, a computer will also include one or more machine-readable storage media, or will be operatively coupled to receive data from, or transfer data to, or both, one or more machine-readable storage media. Machine-readable storage media include mass storage devices for storing data, for example, magnetic, magneto-optical disks, or optical disks. Non-transitory machine-readable storage media suitable for embodying computer program instructions and data include all forms of non-volatile storage area. Non-transitory machine-readable storage media include, for example, semiconductor storage area devices, for example, erasable programmable read-only memory (EPROM), electrically erasable programmable read-only memory (EEPROM), and flash storage area devices. Non-transitory machine-readable storage media include, for example, magnetic disks, for example, internal hard disks or removable disks, magneto-optical disks, and CD-ROM and DVD-ROM disks.

Each computing device may include a hard drive for storing data and computer programs, a processing device (for example, a microprocessor), and memory (for example, RAM) for executing computer programs.

Components of different implementations described in this specification may be combined to form other implementations not specifically set forth in this specification.

**Claims**

1. A system for determining properties of a fluid in a straight conduit (100) having a longitudinal axis, the system comprising:

   at least one exciter (110, 210, 510, 810) attached to an outer surface of the straight conduit, the exciter to induce a vibration pattern in the straight conduit;
   a first isolator (120, 520, 720, 820) disposed at a first location on the outer surface of the straight conduit (100), wherein the first isolator is connected to a fixed support;
   a second isolator (120, 520, 720, 820) disposed at a second location on the outer surface of the straight conduit (100), wherein the second isolator is connected to the fixed support, wherein the second location is spaced from the first location along the longitudinal axis by a measurement length, wherein the exciter (110, 210, 510, 810) is disposed within the measurement length, and wherein the first isolator and second isolator (120, 520, 720, 820) are adapted to prevent vibrations from being transmitted along the straight conduit (100) beyond the measurement length;
   the system being **characterized by** further comprising:

   a plurality of sensors attached to the straight conduit (100) and mounted on the measurement length of the straight conduit (100) in a helical or cycloidal pattern, the sensors to measure a change in one or more mechanical states of the straight conduit caused by the vibration pattern; and
   a processor configured to receive data from the sensors and determine the property of the fluid based on the received data.

2. The system of claim 1, where the exciter comprises a motor (111) rotating a shaft and an eccentrically placed weight (112) mounted on the shaft.

3. The system of claim 1, where the sensors are displacement sensors.

4. The system of claim 1, where the property of the fluid is mass flow or density.

5. The system of claim 1, comprising a plurality of exciters (110, 210, 510, 810), where at least one exciter induces a torsional movement relative to a longitudinal axis of the straight conduit (100) and at least one exciter induces a bending movement in the straight conduit.

6. The system of claim 1, where the system comprises a distributed mass element, the distributed mass element to alter a mechanical property of the straight conduit (100).

7. A method for determining properties of a fluid in a straight conduit (100) having a longitudinal axis, the method comprising:

   connecting to an outer surface of the straight conduit (100) at least one exciter (110, 210, 510, 810) to induce a vibration pattern in the straight conduit;
   attaching, to the outer surface of the straight conduit, a first isolator (120, 520, 720, 820) disposed at a first location and a second isolator (120, 520, 720, 820) disposed at a second location, wherein the first isolator and second isolator (120, 520, 720, 820) are attached to a fixed support, wherein the second location is spaced from the first location along the longitudinal axis by a measurement length, wherein the exciter (110, 210, 510, 810) is disposed within the measurement length, and wherein the first isolator and second isolator (120, 520, 720, 820) are adapted to prevent the vibration pattern from being transmitted along the length of straight conduit (100) beyond the measurement length;
   the method being **characterized by** further comprising:

   attaching a plurality of sensors to the outer surface of the straight conduit, on the measurement length of the straight conduit (100) in a helical or cycloidal pattern, to measure changes in one or more mechanical states of the straight conduit caused by the vibration pattern;

receiving, by a processor, data from the sensors; and

determining, by the processor, from the sensor data, a property of the fluid.

8. The method of claim 7, where the exciter comprises a motor (111) rotating a shaft and an eccentrically placed weight (112) mounted on the shaft.

9. The method of claim 7, where the sensors are displacement sensors.

10. The method of claim 7, where the property of the fluid is mass flow or density.

11. The method of claim 7, the method comprising connecting a plurality of exciters (110, 210, 510, 810) to the straight conduit (100), and causing at least one exciter to induce a torsional movement relative to the longitudinal axis of the straight conduit and at least one exciter to induce a bending movement in the straight conduit.

12. The method of claim 7, comprising connecting a distributed mass element to the straight conduit (100), the distributed mass element to alter a mechanical property of the straight conduit.

**Patentansprüche**

1. Ein System zur Bestimmung von Eigenschaften eines Fluids in einer geraden Leitung (100) mit einer Längsachse, wobei das System aufweist:

mindestens einen an einer Außenfläche der geraden Leitung angebrachten Erreger (110, 210, 510, 810) zum Induzieren eines Schwingungsmusters in der geraden Leitung;

einen an einem ersten Standort auf der Außenfläche der geraden Leitung (100) angeordneten ersten Isolator (120, 520, 720, 820), wobei der erste Isolator mit einer festen Halterung verbunden ist;

einen an einem zweiten Standort auf der Außenfläche der geraden Leitung (100) angeordneten zweiten Isolator (120, 520, 720, 820), wobei der zweite Isolator mit der festen Halterung verbunden ist, wobei der zweite Standort von dem ersten Standort entlang der Längsachse um eine Messlänge beabstandet ist, wobei der Erreger (110, 210, 510, 810) innerhalb der Messlänge angeordnet ist, und wobei der erste Isolator und der zweite Isolator (120, 520, 720, 820) angepasst sind, um zu verhindern, dass Vibrationen entlang der geraden Leitung (100) über die Messlänge hinaus übertragen werden;

wobei das System **dadurch gekennzeichnet ist, dass** es ferner aufweist:

eine Vielzahl von Sensoren, die an der geraden Leitung (100) angebracht sind und auf der Messlänge der geraden Leitung (100) in einem schraubenförmigen oder zykloidenförmigen Muster montiert sind, wobei die Sensoren eine Änderung eines oder mehrerer mechanischer Zustände der geraden Leitung, die durch das Vibrationsmuster verursacht werden, messen; und

einen Prozessor, der konfiguriert ist, um Daten von den Sensoren zu empfangen und die Eigenschaft des Fluids basierend auf den empfangenen Daten zu bestimmen.

2. Das System nach Anspruch 1, wobei der Erreger einen Motor (111, der eine Welle dreht, und ein exzentrisch angeordnetes Gewicht (112, das auf der Welle montiert ist) aufweist.

3. Das System nach Anspruch 1, wobei die Sensoren Wegsensoren sind.

4. Das System nach Anspruch 1, wobei die Eigenschaft des Fluids der Massenstrom oder die Dichte ist.

5. Das System nach Anspruch 1, das eine Vielzahl von Erregern (110, 210, 510, 810) aufweist, wobei mindestens ein Erreger eine Torsionsbewegung relativ zu einer Längsachse der geraden Leitung (100) und mindestens ein Erreger eine Biegebewegung in der geraden Leitung induziert.

6. Das System nach Anspruch 1, wobei das System ein Masseverteilungselement aufweist, wobei das Masseverteilungselement eine mechanische Eigenschaft der geraden Leitung (100) verändert.

7. Ein Verfahren zur Bestimmung von Eigenschaften eines Fluids in einer geraden Leitung (100) mit einer Längsachse, wobei das Verfahren folgende Schritte aufweist:

Verbinden mindestens eines Erregers (110, 210, 510, 810) mit einer Außenfläche der geraden Leitung (100), um ein Vibrationsmuster in der geraden Leitung zu induzieren;

Verbinden eines ersten Isolators (120, 520, 720, 820), der an einem ersten Standort angeordnet ist, und eines zweiten Isolators (120, 520, 720, 820), der an einem zweiten Standort angeordnet ist, mit der Außenfläche der geraden Leitung, wobei der erste Isolator und der zweite Isolator (120, 520, 720, 820) an einem festen Halter angebracht sind, wobei der zweite Standort von dem ersten Standort entlang der Längsachse um eine Messlänge beabstandet ist, wobei der Erreger (110, 210, 510, 810) innerhalb der Messlänge angeordnet ist, und wobei der erste Isolator und der zweite Isolator (120, 520, 720, 820) geeignet sind, zu verhindern, dass das Vibrationsmuster entlang der Länge der geraden Leitung (100) über die Messlänge hinaus übertragen wird;

das Verfahren **dadurch gekennzeichnet ist, dass** es ferner folgende Schritte aufweist:

Verbinden einer Vielzahl von Sensoren mit der Außenfläche der geraden Leitung auf der Messlänge der geraden Leitung (100) in einem schraubenförmigen oder zykloidenförmigen Muster, um Änderungen eines oder mehrerer mechanischer Zustände der geraden Leitung, die durch das Vibrationsmuster verursacht werden, zu messen;
Empfangen von Daten von den Sensoren durch einen Prozessor; und
Bestimmen einer Eigenschaft des Fluids anhand der Sensordaten durch den Prozessor.

8. Das Verfahren nach Anspruch 7, wobei der Erreger einen Motor (111, der eine Welle dreht, und ein exzentrisch angeordnetes Gewicht (112), das auf der Welle montiert ist, aufweist.

9. Das Verfahren nach Anspruch 7, wobei die Sensoren Wegsensoren sind.

10. Das Verfahren nach Anspruch 7, wobei die Eigenschaft des Fluids der Massenstrom oder die Dichte ist.

11. Das Verfahren nach Anspruch 7, wobei das Verfahren das Verbinden einer Vielzahl von Erregern (110, 210, 510, 810) mit der geraden Leitung (100) aufweist und bewirkt, dass mindestens ein Erreger eine Torsionsbewegung relativ zur Längsachse der geraden Leitung und mindestens ein Erreger eine Biegebewegung in der geraden Leitung induziert.

12. Das Verfahren nach Anspruch 7, aufweisend das Verbinden eines Massenverteilungselements mit der geraden Leitung (100), wobei das Massenverteilungselement eine mechanische Eigenschaft der geraden Leitung verändert.

## Revendications

1. Système pour déterminer des propriétés d'un fluide dans un conduit droit (100) ayant un axe longitudinal, le système comprenant :

au moins un excitateur (110, 210, 510, 810) fixé à une surface extérieure du conduit droit, l'excitateur induisant un motif de vibration dans le conduit droit ;
un premier isolateur (120, 520, 720, 820) disposé à un premier emplacement sur la surface extérieure du conduit droit (100), dans lequel le premier isolateur est relié à un support fixe ;
un second isolateur (120, 520, 720, 820) disposé à un second emplacement sur la surface extérieure du conduit droit (100), dans lequel le second isolateur est relié au support fixe, dans lequel le second emplacement est espacé du premier emplacement le long de l'axe longitudinal par une longueur de mesure, dans lequel l'excitateur (110, 210, 510, 810) est disposé dans la longueur de mesure, et dans lequel le premier isolateur et le second isolateur (120, 520, 720, 820) sont adaptés pour empêcher les vibrations d'être transmises le long du conduit droit (100) au-delà de la longueur de mesure ;
le système étant **caractérisé en ce qu'**il comprend en outre :

une pluralité de capteurs fixés au conduit droit (100) et montés sur la longueur de mesure du conduit droit (100) selon un motif hélicoïdal ou cycloïdal, les capteurs mesurant un changement dans un ou plusieurs états mécaniques du conduit droit causé par le motif de vibration ; et
un processeur configuré pour recevoir des données provenant des capteurs et déterminer la propriété du fluide sur la base des données reçues.

2. Système selon la revendication 1, dans lequel l'excitateur comprend un moteur (111) faisant tourner un arbre et un poids placé de manière excentrique (112) monté sur l'arbre.

3. Système selon la revendication 1, dans lequel les capteurs sont des capteurs de déplacement.

4. Système selon la revendication 1, dans lequel la propriété du fluide est le débit massique ou la densité.

5. Système selon la revendication 1, comprenant une pluralité d'excitateurs (110, 210, 510, 810), dans lequel au moins un excitateur induit un mouvement de torsion par rapport à un axe longitudinal du conduit droit (100), et au moins un excitateur induit un mouvement de flexion dans le conduit droit.

6. Système selon la revendication 1, dans lequel le système comprend un élément de masse distribuée, l'élément de masse distribuée modifiant une propriété mécanique du conduit droit (100).

7. Procédé de détermination des propriétés d'un fluide dans un conduit droit (100) ayant un axe longitudinal, le procédé comprenant :

   relier à une surface extérieure du conduit droit (100) au moins un excitateur (110, 210, 510, 810) pour induire un motif de vibration dans le conduit droit ;
   fixer, à la surface extérieure du conduit droit, un premier isolateur (120, 520, 720, 820) disposé à un premier emplacement et un second isolateur (120, 520, 720, 820) disposé à un second emplacement, dans lequel le premier isolateur et le second isolateur (120, 520, 720, 820) sont fixés à un support fixe, dans lequel le second emplacement est espacé du premier emplacement le long de l'axe longitudinal par une longueur de mesure, dans lequel l'excitateur (110, 210, 510, 810) est disposé dans la longueur de mesure, et dans lequel le premier isolateur et le second isolateur (120, 520, 720, 820) sont adaptés de manière à empêcher le motif de vibration d'être transmis le long de la longueur du conduit droit (100) au-delà de la longueur de mesure ;
   le procédé étant **caractérisé en ce qu'**il comprend en outre :

   fixer une pluralité de capteurs à la surface extérieure du conduit droit, sur la longueur de mesure du conduit droit (100), selon un motif hélicoïdal ou cycloïdal, pour mesurer les changements dans un ou plusieurs états mécaniques du conduit droit causés par le motif de vibration ;
   la réception, par un processeur, des données provenant des capteurs ; et
   déterminer, par le processeur, à partir des données des capteurs, une propriété du fluide.

8. Procédé selon la revendication 7, dans lequel l'excitateur comprend un moteur (111) faisant tourner un arbre et un poids placé de manière excentrique (112) monté sur l'arbre.

9. Procédé selon la revendication 7, dans lequel les capteurs sont des capteurs de déplacement.

10. Procédé selon la revendication 7, dans lequel la propriété du fluide est le débit massique ou la densité.

11. Procédé selon la revendication 7, le procédé comprenant la liaison d'une pluralité d'excitateurs (110, 210, 510, 810) au conduit droit (100), de sorte qu'au moins un excitateur induise un mouvement de torsion par rapport à l'axe longitudinal du conduit droit et qu'au moins un excitateur induise un mouvement de flexion dans le conduit droit.

12. Procédé selon la revendication 7, comprenant la liaison d'un élément de masse distribuée au conduit droit (100), l'élément de masse distribuée modifiant une propriété mécanique du conduit droit.

FIG. 1

FIG. 2

FIG. 3A

FIG. 3B

FIG. 4

510
511
100
510
511
511
510
510
511

□□ Permanent magnet

▯ Electromagnet

FIG. 5A

100
520
510
520
520
510
520
Fluid flow
520
510
520

Isolators          Exciters          Isolators

FIG. 5B

EP 4 121 723 B1

16

FIG. 6A

FIG. 6B

FIG. 7

FIG. 8A

FIG. 8B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 82091920
- US 4984472 A
- WO 2019134430 A
- JP H09196730 B
- US 6360614 B